# EUROPÄISCHE PATENTSCHRIFT

(11) **EP 0 868 412 B1**
(45) Veröffentlichungstag und Bekanntmachung des Hinweises auf die Patenterteilung: **05.09.2001**
(21) Anmeldenummer: 96943911.6
(22) Anmeldetag: 11.12.1996
(51) Int. Cl.: C04B 38/02

(54) **ZUSAMMENSETZUNG ZUR ERZEUGUNG VON LEICHTGIPS UND IHRE VERWENDUNG**
COMPOSITION FOR PRODUCING LIGHT PLASTER AND ITS USE
COMPOSITION POUR PRODUIRE DU PLATRE LEGER ET SON UTILISATION

(30) Priorität: 20.12.1995 DE 19547719
(43) Veröffentlichungstag der Anmeldung: 07.10.1998
(73) Patentinhaber: Henkel Kommanditgesellschaft auf Aktien, 40589 Düsseldorf-Holthausen (DE)
(72) Erfinder: KLAUCK, Wolfgang, D-40670 Meerbusch (DE); KLUTH, Hermann, D-40595 Düsseldorf (DE); HÜBNER, Wilfried, D-40764 Langenfeld (DE); KOLENDA, Felicitas, D-40789 Monheim (DE)
(86) Internationale Anmeldenummer: EP9605517
(87) Internationale Veröffentlichungsnummer: WO9722567

(56) Entgegenhaltungen:
- EP-A- 0 254 501
- EP-A- 0 449 234
- EP-A- 0 562 651
- DE-A- 4 009 967
- GB-A- 299 484
- GB-A- 299 854
- GB-A- 2 019 381
- US-A- 1 720 032
- US-A- 1 782 384
- US-A- 4 332 619

## Beschreibung

Die vorliegende Erfindung betrifft eine Zusammensetzung zur Erzeugung von Leichtgips, die ein Treibmittel zur verzögerten Gasentwicklung enthält. Weiterer Gegenstand ist die Verwendung der Zusammensetzung zur Herstellung von Gipsbauteilen bzw. Formteilen mit geringer Dichte sowie von Montage- und Isolierschaum.

Zusammensetzungen zur Erzeugnis von Leichtgips, die als wesentliche Bestandteile teilchenförmigen abbindefähigen Gips insbesondere in Form von Anhydrit und/oder Halbhydrat sowie wenigstens ein Treibmittel enthalten, welches aus einer Säure in Form einer Mineralsäure oder einer organischen Säure besteht und als weitere Komponente ein gasbildendes Salz enthalten, sind bereits bekannt. Unter Gips in Form von Anhydrid im Sinne der vorliegenden Erfindung versteht man reines Calciumsulfat ohne Hydratwasser.

So betrifft CA 119:78617, eine Zusammenfassung der JP-A-05105544, ein Gipsprodukt niedriger Dichte bei dem Anhydrit, Sulfate sowie Calciumcarbonat miteinander kontaktiert werden, wobei Kohlendioxidgasblasen entstehen.

In der US 1,720,032 wird ein poröses Produkt beschrieben, welches aus Gips, einem wasserlöslichen Carbonat und einem wasserlöslichen Fluorsilikat eines zweiwertigen Metalles in Wasser hergestellt wird.

In der US 1,782,384 wird ein Verfahren zur Herstellung von feinporigen Formteilen aus Materialien wie Zement und Magnesiumoxid beschrieben. Zur Gaserzeugung wird eine mit Wasser Gas-bildende Substanz wie Calciumcarbid verwendet, die mit einer wasserlöslichen oder wasserdispergierbaren Schutzschicht überzogen ist. Konkret werden dafür Fettderivate genannt.

In der GB 299 854 wird unter anderem ein Verfahren zur Herstellung von Leichtgips beschrieben. Zur Gasbildung wird eine mit Wasser Gas-bildende Substanz wie Calciumcarbid oder Calciumhydrid verwendet, die mit Leim, Gelatine oder Wasserglas beschichtet ist.

CA 91:61734, eine Zusammenfassung der SU 77-2522229, betrifft ein Gipsprodukt niederer Dichte, bei dem Gips-Halbhydrat mit einer Natriumcarbonatschmelze, Natriumsulfat und Wasser umgesetzt wird.

CA 89:48101, eine Zusammenfassung der JP-A-76-92941, betrifft ein Gipsprodukt niederer Dichte in Plattenform, welches erhalten wird durch Umsetzung von Gips-Halbhydrat zusammen mit Calciumcarbonat in Gegenwart von verdünnter Schwefelsäure und Wasser.

CA 85:24916, eine Zusammenfassung der JP-A-74-107004, betrifft ein Gipsprodukt niederer Dichte, bei dem ein Gips-Halbhydrat zusammen mit einem pulverförmigen Alkali- oder Erdalkalicarbonat in Gegenwart einer wäßrigen Lösung umgesetzt werden, die weiterhin Methylcellulose enthält. Das so erzeugte geschäumte Material weist eine Dichte von 0,5 g/cm³ auf.

CA 84:168779 betrifft eine Gipsaufschlämmung enthaltend calcinierten Gips, Calciumcarbonat sowie eine 40 % Hexaflurokieselsäure und Wasser als Rest. Auf diese Weise wird ein Gips Leichtprodukt mit einer Dichte von 0,55 erhalten.

CA 84:154766, eine Zusammenfassung der JP-A-74-77409, betrifft ein Gipsprodukt niederer Dichte, bei dem ein calcinierter Gips, zusammen mit Natriumstearat, Calciumcarbonat, verdünnter Fluorwasserstoffsäure sowie Wasser als Rest kontaktiert und daraufhin zu geschäumten Formteilen umgesetzt wird. Die so erhaltenen Leichtbau-Gipsformteile weisen eine Dichte von 0,61 auf.

CA 84:154755, eine Zusammenfassung der JP-A-74-66659, betrifft ein Gipsprodukt niederer Dichte, bei dem eine Mischung aus 95 Gew.-% Calciumsulfat-Halbhydrat und 5 Gew.-% Calciumcarbonat zusammen mit einer 3 %-igen Schwefelsäure, Fasermaterial umgesetzt werden. Die so erhaltenen Formteile weisen ein spezifisches Gewicht von weniger als 0,1 auf.

CA 84:126033, eine Zusammenfassung der JP-A-74-64062, betrifft ein Gipsprodukt niederer Dichte, bei dem calcinierter Gips zusammen mit Calciumstearat, Calciumcarbonat sowie eine 40 %-igen wäßrigen Hexaflourokieselsäurelösung sowie Wasser umgesetzt werden, um ein Formprodukt mit einem spezifischen Gewicht von 0,47 zu erhalten.

CA 82:47224, eine Zusammenfassung der JP-A-72-119764, betrifft ein Gipsprodukt niederer Dichte, bei dem ein calcinierter Gips zusammen mit Wasser, Calciumcarbonat sowie Calciumfluorosilikat und Bariumstearat umgesetzt werden. Auf diese Weise erhält man ein calciniertes Gipsprodukt mit einer Dichte von 0,57 g/cm³.

CA 80:73793, eine Zusammenfassung der JP-A-72-5988, betrifft ein Baumaterial niederer Dichte, bei dem ein Carbonat oder Bicarbonat zusammen mit einem Phosphorsäurepartialester bei Raumtemperatur oder oberhalb Raumtemperatur umgesetzt werden. Zu dieser Mischung kann u. a. Gips hinzugefügt werden, wobei diese Mischung soweit sie auf oberhalb 50 °C erwärmt wird, zu einem Gipsschaumprodukt mit einer Dichte von 0,4 g/cm³ führt.

CA 122:272364, eine Zusammenfassung des deutschen Patents 43 33 115, betrifft Zement, Beton oder ein ähnliches Baumaterial, welches erhalten wird, indem man ein aushärtbares Calciumsulfat zusammen mit einem Alkalimetallbicarbonat, Borsäure, Calciumhydroxid sowie einem Schaummittel, einem Weichmacher sowie einem Verzögerungsmittel, umsetzt. Die so erzeugten Leicht-Gipsprodukte weisen eine Dichte 1,3 g/cm³ auf.

CA 120:84826, eine Zusammenfassung der EP-A-562651, betrifft ein Gipsprodukt mit einer scheinbaren Dichte von 0,5 bis 1,5 g/cm³, das erhältlich ist durch Umsetzen von Calciumsulfat, Magnesiumhexafluorosilikat, Aluminiumstearat, Calciumcarbonat und/oder Magnesiumcarbonat, Methylcellulose, Natriumcitrat und Wasser.

Research Disclosure; Band 135; July 1975, Seite 37, Referat No. 13540, betrifft die Herstellung von Gips niederer Dichte, bei dem Gips-Halbhydrat zusammen mit Mangandioxid und Wasser zunächst aufgeschlämmt und dann Wasserstoffperoxid zwecks Schaumbildung zugefügt wird. Weiterhin können PVA-Emulsionen zu diesem Produkt hinzugefügt werden um die Produkteigenschaften zu verbessern.

CA 101:11552, eine Zusammenfassung der JP-A-82-124909, betrifft ein Gipsprodukt niederer Dichte, bei dem ein Gips-Halbhydrat mit Bariumstearat, Calciumcarbonat, Calciumoxid, einer wäßrigen Polyvinylalkohol-Lösung sowie Wasser, umgesetzt wird, wobei Gipselemente mit einer Dichte von 0,76 erhalten werden.

CA 101:11551, eine Zusammenfassung der JP-A-82-124910, betrifft ein Gipsprodukt niedriger Dichte, bei dem β-Gips-Halbhydrat, Calciumstearat, Calciumcarbonat, Calciumoxid, Polyvinylalkohol und Ammoniumsulfat zusammen mit Hexafluorokieselsäure umgesetzt werden. Das so erhaltene Produkt weist eine Dichte von 0,78 auf.

CA 101:11550, eine Zusammenfassung der JP-A-82-124908, betrifft ein Gipsprodukt mit einer Dichte von etwa 0,76, erhalten durch Umsetzung von Gips-Halbhydrat, hydrophoben Stearaten, Carbonaten oder Bicarbonaten, basischen Oxiden in Gegenwart von sauren Fluoriden und Wasser sowie synthetischen Harzen.

CA 101:11549, eine Zusammenfassung der JP-A-82-124907, betrifft ein Gipsprodukt niederer Dichte, d. h. mit einer Dichte von etwa 0,78, erhalten durch Umsetzung von Gips-Halbhydrat, hydrophobischen Stearaten, Carbonaten oder Bicarbonaten, basischen Oxiden, Emulsionen von synthetischen Harzen, Wasser sowie Säurefluoriden, wie wäßriger Hexafluorokieselsäure.

CA 100:214666, eine Zusammenfassung der JP-82-112342, betrifft ein Gipsprodukt mit einer Dichte von etwa 0,78, durch Umsetzen von Gips-Halbhydrat, Stearaten, Carbonaten oder Bicarbonaten, basischen Oxiden, sauren Fluoriden, wie beispielsweise Hexafluorokieselsäure in Gegenwart von Polyvinylalkohol.

CA 89:151558, eine Zusammenfassung der JP-A-76-128274, betrifft ein Gipsprodukt mit einer Dichte von 0,35 g/cm³, bei dem ein calcinierter Gips, ein Fasermaterial, ein Metalloxid sowie ein Stabilisierungsmittel mit Wasser kontaktiert und daraufhin ein Percarbonat hinzugegeben und dann eine Wärmebehandlung durchgeführt wird.

CA 87:89532, eine Zusammenfassung der JP-A-75-93352, betrifft ein Gipsprodukt niederer Dichte, bei dem ein α-Gips zusammen mit Wasser verrührt und daraufhin mit Ammoniumhydrogencarbonat versetzt wird.

CA 80:86931, eine Zusammenfassung der JP-A-69-84902, betrifft ein Gipsprodukt mit einer Dichte von etwa 0,56 g/cm³, welches erhältlich ist durch Umsetzung von einer calcinierten Gipsaufschlämmung, der eine konzentrierte wäßrige Formaldehydlösung, Wasser und Ammoniumhydrogencarbonat zugefügt werden.

CA 82:102462, eine Zusammenfassung der JP-A-72-347, betrifft ein Gipsprodukt niederer Dichte, erhältlich durch Umsetzung von synthetischem Gips, und Natriumhydrogencarbonat, welches zusammen mit einer 1 %igen Polyvinylalkohollösung versetzt und dann auf 80 °C für eine Stunde erhitzt worden ist.

CA 81:175233, eine Zusammenfassung der JP-A-72-107634, betrifft Gipsprodukte mit Dichten von 0,15 - 0,65 g/cm³, die erhältlich sind durch Umsetzung einer Gipsaufschlämmung zusammen mit einem Fettsäuresalz, einem Schaumstabilisator auf Basis eines Fettsäuresalzes, sowie Calciumcarbonat, sowie Aluminiumsulfat.

CA 115:238433 ebenso wie CA 112:164011, eine Zusammenfassung eines Artikels aus CLB Chem Labor Biotech. (1990), 41 (2), Seite 79 - 80, betrifft ein künstliches Baumaterial, bei dem Tenside, Bariumcarbonat und Wasser gemischt und aufgeschäumt werden und daraufhin Ton oder unter anderem Gips mit diesem Schaum vermengt werden.

Die JP-A-90/296780 betrifft ein Gipsprodukt niederer Dichte oder Gipsschaum welches erhalten wird durch Umsetzung einer Gipsaufschlämmung mit einem Sulfonat eines C10-C16 Fettsäurealkylesters als Schäumungsmittel.

Die DE-C- 41 34 550 betrifft ein Verfahren zur Herstellung Ortschaum durch Umsetzung von aufgeschlämrnten Gips mit Polyisocyanat-Präpolymeren, bei dem als aufgeschlämmter Gips 30 bis 70 Gew.-% Gipsdihydrat und 30 bis 30 % Wasser, bezogen auf die Schlämme, verwendet werden und 40 bis 60 Gew.-% der Gipsdihydrat-Wasserschlämme und 60 bis 40 Gew.-% übliche Diphenylmethan-4,4'-diisocyanat oder Diphenylmethan-4,2'-diisocyanat-Prepolymere mit einem NCO-Gehalt im Bereich von 2 bis 20 Gew.-% oder 2,4-Toluylendiisocyanat- oder 2,6-Toluylendiisocyanat-Prepolymere mit einem NCO-Gehalt im Bereich von 2 bis 20 Gew.-% oder ein Gemisch dieser Verbindungen unter inniger Vermischung in die Fuge einbringt und bei Normaltemperatur und Normaldruck härten läßt. Der Ortschaum wird insbesondere mittels eines Mehrkomponentengeräts wie einer Sprühdose oder Spritzpistole erzeugt. Bei Zweikomponenten-Systemen besteht die wäßrige Komponente aus einer thixotropen Hydrargillit/REA-Gips-Mischung mit einem Festkörpergehalt von mindestens 66 Gew.-% unter Verwendung von wasserlösbaren chemisch modifizierten Cellulosen als Thixotropierungsmittel. Der so erhaltene Schaum läßt sich nach dem Aushärten mechanisch bearbeiten und ist flammhemmend. Auf dieselbe Priorität geht auch die WO 93/08142 zurück.

CA 92:63584p, eine Zusammenfassung der JP-A 79/119528, betrifft ein Gipsprodukt niederer Dichte, bei dem ein Gips-Halbhydrat mit einem Urethan-Präpolymer und Wasser gegebenenfalls in Gegenwart von Füllstoffen geschäumt und aushärten gelassen wird. Man erhält so ein flammhemmendes Gipsprodukt mit einem spezifischen Gewicht von 0,52.

Im Rahmen einer sich ständig intensivierenden Umweltdiskussion existiert ein hoher Bedarf an umweltverträglicheren Isolationsmaterialien und Gipsbauteilen und Gipsformteilen niederer Dichte.

Die heutigen Einkomponenten- und Zweikomponenten-Polyurethan-Schäume, die in Behältnissen wie Dosen oder mit Mischaggregaten unter anderen zur Wärmeisolation eingesetzt werden, belasteten mit einem Teil Ihrer Inhaltsstoffe beispielsweise dem als Treibmittel eingesetzte Frigen® d. h. Fluorchlorkohlenwasserstoffe, teilhalogenierte Fluorchlorkohlenwasserstoffe, Fluorkohlenwasserstoffe (FCKW, HFCKW, FKW) die Umwelt und belasten sie auch heute noch durch halogenhaltige Flammschutzmittel.

Alle vorgenannten Zusammensetzungen zur Erzeugung von Gips niederer Dichte sind insofern nachteilig, daß die Schaumbildung durch Gaserzeugung bei Systemen ohne Polyurethane unmittelbar nach Zugabe der gaserzeugenden Komponente erfolgt, d.h. die Topf- oder Ruhezeit (= Zeit vor der Volumenvergrößerung) derartiger Systeme liegt bei ca. 1- 10 s, was derartige Systeme in der Praxis für eine direkte "vor OrtAnmischung" wenig handhabbar macht. Aber auch bei Systemen mit Polyisocyanaten, die bei reinen PU-Schäumen üblicherweise Topf- oder Ruhezeiten von 5 bis 60 s aufweisen, reicht diese Zeitspanne meist nicht aus, um eine derartige Zusammensetzung des Standes der Technik vor der Aufschäumung in komplexe Hohlräume bei einer Verwendung als Ortschaum eingeben zu können (vgl. Franck, Kunststoff-Kompendium, 1. Aufl., Würzburg 1984, S. 211). Auch die Steigzeit (= Zeit vom Durchmischungsbeginn bis zum Stillstand der Aufblähung) liegt bei reinen PU-Schäumen bei nur 55 bis 270 s und kann insofern in komplexen und großflächigen Hohlräumen nie zu einem Leichtgips führen, der homogen geschäumt ist, eine zwingende Voraussetzung beispielsweise für gute Isolierungseigenschaften.

Der vorliegenden Erfindung liegt die Aufgabe zugrunde, eine verbesserte Zusammensetzung zur Erzeugung von Leichtgips zu schaffen, die als wesentliche Bestandteile abbindefähigen teilchenförmigen Gips in Form von Anhydrit und/oder Halbhydrat sowie wenigstens ein Treibmittel enthält, welche unter Anwendungsbedingungen, also in Gegenwart von Wasser, Topf- oder Ruhezeiten aufweist, die nach einer je nach Einsatzzweck individuell abzustimmenden Zeit eingestellt werden kann, und die in den meisten Fällen größer ist als Topfzeiten von Zusammensetzungen zur Erzeugung von Gips niederer Dichte, die der Stand der Technik bereitstellt.

Diese Aufgabe wird dadurch gelöst, daß diese ein spezielles Treibmittel mit einer hohen Ruhezeit in einer speziellen Konzentration einsetzt.

Die Erfindung betrifft daher eine Zusammensetzung zur Erzeugung von Leichtgips, die als wesentliche Bestandteile abbindefähigen teilchenförmigen Gips in Form von Anhydrit und /oder Halbhydrat sowie wenigstens ein Treibmittel enthält, die dadurch gekennzeichnet ist, daß das Treibmittel retardierend oder verzögert innerhalb von 1 min bis 24 h nach seiner Mischung mit Wasser Gas erzeugt und daß es mit wenigstens einer wasserdurchlässigen Beschichtung, sei es aus einem synthetisch modifizierten Polysaccharid oder einem synthetischen Polymer ausgewählt aus Polyvinylverbindungen, Polyacrylverbindungen, Poly-2-ethoxazolin, Polyurethan oder Polyelektrolyten, versehen ist.

Vorzugsweise wird durch das Treibmittel innerhalb von 1,5 bis 60 min und besonders bevorzugt innerhalb von 3 min bis 30 min Gas erzeugt.

Nach einer bevorzugten Ausführungsform enthält die Zusammensetzung zur Erzeugung von Leichtgips 0,1 bis 50 Gew.-%, vorzugsweise 1 bis 20 Gew.-% wenigstens eines Treibmittels zur verzögerten Gaserzeugung.

Unter einem Treibmittel im Sinne der vorliegenden Erfindung versteht man einen Stoff, mit dem man nach der Zugabe von Wasser zu dem teilchenförmigen abbindefähigen Gips ein Treibgas entwickeln kann. Durch das zugefügte Treibmittel erfolgt eine Ausblähung der Mischung aus abbindefähigem Gips und Wasser.

Unter teilchenförmigem abbindefähigem Gips im Sinne der vorliegenden Erfindung wird sowohl ein kugelfömiger, ein stäbchenförmiger oder ein unregelmäßig geformter Gips verstanden, der sowohl pulverfömig als auch in Form von Microperls vorliegen kann wobei die üblichen Korndurchmesser zwischen 1 µm und 1 cm, vorzugsweise aber zwischen 2 µm bis 1 mm liegen.

Wiederum ist es hierbei bevorzugt, daß das Treibmittel zur verzögerten Gaserzeugung aus wenigstens zwei Komponente besteht, von denen wenigstens eines mit einer wasserdurchläßigen, vorzugsweise filmbildenden Beschichtung versehen ist. Natürlich können bei dem Treibmittel aus 2 zugefügten Komponenten auch beide Komponenten beschichtet sein.

Alternativ kann die Zusammensetzung auch so ausgestaltet werden, daß das Treibmittel zur verzögerten Gaserzeugung aus einer Komponente besteht, die mit einer wasserdurchläßigen, vorzugsweise filmbildenden Beschichtung versehen ist.

Die vorgenannte wasserdurchläßige, vorzugsweise filmbildende Beschichtung enthält wenigstens ein wasserquelllbares, wasserdispergierbares oder wasserlösliches, synthetisch modifiziertes Polysaccharid.

Die als Beschichtungsmittel in den erfindungsgemäßen Zusammensetzungen eingesetzten Polymere auf Basis von Polysacchariden enthalten aus Landpflanzen, aus Meerespflanzen oder aus Mikroorganismen gewonnene filmbildende Materialien.

Unter Verdickungsmittel auf Basis von Polysacchariden aus Landpflanzen versteht man zunächst Stärke und Stärkeprodukte, also beispielsweise Mais-, Weizen- und Reisstärke sowie die Kartoffel- und die Tapiokastärke. Unter Stärkeprodukten im Sinne der vorliegenden Erfindung versteht man mit Hilfe von physikalischen Modifikationen modifizierte Stärkeprodukte, die im Gegensatz zu nativer Stärke weder vor ihrem Einsatz gekocht werden müssen, um den Verdickungseffekt zu erhalten, noch opake und instabile Lösungen unter Bildung einer Gallerte oder einen Niederschlag beim Stehenlassen bildet. Derartige, durch physikalische Modifikation und/oder enzymatischen Abbau hergestellte Stärken werden insbesondere durch eine Vorkleisterung und eine anschließende Trocknung, eine sogenannte Walzen- oder Sprühtrocknung in Form von Quellenstärken erhalten. Weitere aus Landpflanzen gewonnene Polysaccharide sind die Galactomannane, wobei hier beispielhaft das Johannisbrotkernmehl sowie das Guar-Gummi genannt sind. Weitere aus Landpflanzen gewonnene Polysaccharide sind die sogenannten Pektine oder Pektinstoffe, wobei man je nach Ausgangsstoff Orangenpektin, Grapefruitpektin, Zitronenpektin, Limonenpektin und Apfelpektin unterscheidet. Weitere deutliche Unterschiede kann man daran erkennen, ob man ein hoch- oder eine niedrigverestertes Produkt einsetzt. Anstelle von Pektin selbst kann auch der Hauptbestandteil dieses Stoffes, die Polygalacturonsäure, eingesetzt werden. Weiteres Polysaccharid, welches aus Landpflanzen gewonnen wird, ist ein Exsudat-Gummi, worunter man beispielsweise Gummi Arabicum oder Akaziengummi sowie Tragant versteht. Weitere aus Landpflanzen gewonnene Polysaccharide sind Cellulosederivate, wie beispielsweise die O-Carboxymethyl-cellulose (CMC) sowie die O-Methylcellulose. Sonstige aus Landpflanzen gewonnene Polysaccharide leiten sich von Quittensamenschleim und Leinsamenschleim, Kirschgummi, Salepmannan, Lärchengummi, Lichenin aus Irisch Moos, Tamarinenkernmehl, Konjakumehl sowie Taragummi ab.

Bei den aus Meerespflanzen gewonnenen Polysacchariden, die für eine wasserentfernbare Schicht bildende Beschichtung eingesetzt werden können, versteht man zunächst Alginate, also aus den Zellwänden verschiedener Braunalgen erhaltene Polysaccharide. Weitere aus Meerespflanzen gewonnene Polysaccharide sind Agar, die aus den Zellwänden von Rotalgen der Spezies Gelidium und Gracilaria erhalten werden und Gemische aus der gelierenden Agarose und dem nicht gelierenden Agropektin darstellen. Andere aus Meerespflanzen gewonnene Polysaccharide sind die durch Extraktion von bestimmten Rotalgen gewonnene Carrageenane. Schließlich fallen unter derartige, aus Meerespflanzen gewonnene Polysaccharide auch zahlreiche weitere Algenpolysaccharide, von denen der bekannteste der dänische Agar ist.

Eine weitere Gruppe von Polysacchariden, die als filmbildendes Beschichtungsmittel eingesetzt werden können, sind Verdickungsmittel aus Mikroorganismen und hier beispielsweise das von Leuconostoc mesenteroides gebildete Dextran sowie das von Xanthomonas Campestris gebildete Xanthan.

Unter synthetisch modifizierten Pollysacchariden versteht man insbesondere zunächst die entsprechenden Celluloseether, Celluloseester, Stärkester oder Stärkeether oder eine Mischung hiervon. Beispiele für Celluloseether sind Methylcellulose, Hydroxymethyl-cellulose, Hydroxymethylhydroxyethylcellulose, Hydroxypropylcellulose, Hydroxy-propylmethylcellulose, Hydroxyethylmethylcellulose, Hydroxyethylcellulose, Cyano-ethylcellulose, Ethylcellulose, Carboxymethylcellulose oder eine Mischung der vorgenannten Celluloseether.

Beispiele für Celluloseester sind Celluloseacetat, Celluloseacetobutyrat, Celluloseacetopropionat, Cellulosepropionat oder eine Mischung dieser Celluloseester. Beispiele für Stärkeester sind Stärkenitrat, Stärkephosphat, Stärkexanthogenat, Stärkeacetat, Stärkesulfat, Stärkecitrat oder eine Mischung dieser Stärkeester. Beispiele für Stärkeether sind Stärkecarboxymethylether, Hydroxyethylstärke, Hydroxypropylstärke, kationische Stärken sowie eine Mischung der vorgenannten Stärkeether.

Unter enzymatisch zersetzbaren Substanzen im Sinne der vorliegenden Erfindung versteht man insbesondere orgnanische Substanzen, die unter dem Einfluß von Mikroorganismen abgebaut werden. Dies sind beispielsweise die vorgenannten Polysaccharide und modifizerten Polysaccharide.

Unter synthetischen Polymeren, die als filmbildendes, wasserentfernbares Beschichtungsmaterial eingesetzt werden können, können solche Polymere eingesetzt werden, die ausgewählt sind aus Polyvinylverbindungen, vorzugsweise Polyvinylalkohol, Polyvinylpyrrolidon, Polyvinylacetat/Crotonsäurecopolymerisaten, Polymaleinsäureanhydrid und deren Copolymeren, Polyvinyllbutyral; aus Polyacrylverbindungen, vorzugsweise Poly(meth)acrylsäureestercopolymerisaten; Poly-2-ethyloxazolin sowie Polyacrylamiden. Schließlich fallen unter den Begriff der wasserentfernbaren, synthetischen Polymere auch noch Polyelektrolyte wie anionische Polyelektrolyte, beispielsweise Poly(acrylsäure) und ihre Salze, Poly(methacrylsäure) und ihre Salze, Poly(vinylsulfonsäure) und ihre Salze, Poly(styrolsulfonsäure) und ihre Salze, 2-Methacryloyloxiethansulfonat (SEM), 3-Methyacryloyloxy-2-hydroxypropansulfonsäure (SHPM), 2-Acrylamido-2-methyl-propansulfonsäure (AMPS), Natrium-3-acrylamido-3-methylbutanat, Natrium-3-methacrylamido-3-methylbutanat, Poly(vinylphosphonsäure)salze, Poly(malein)-säure, Poly(4-vinylbenzoesäure)salze, Poly(3-vinyloxypropan-1-sulfonsäure)salze, Poly(4-vinylphenol)salze sowie Poly(N-vinyl-bernsteinsäureimid)säure. Weiterhin versteht man unter derartigen Polyelektrolyten auch kationische Polyelektrolyte, beispielsweise Kationen auf Basis von Polyacrylamid, Diallyldimethylammoniumchlorid, Diallyldiethylammoniumchlorid, Diethylaminoethylmethacrylat, Dimethylaminoethylmethacrylat, Methacryloyloxyethyl-trimethylammoniumsulfat, Methacryloy(oxyethyldimethylammoniumchlorid sowie 3-(Methacrylamido)propyltrimethylammoniumchlorid. Eine Übersicht über derartig einzusetzende, wasserlösliche Polymere findet man in der Encyclopedia of Polymer Science and Engineering, Bd. 17 (1989), Seite 7:30 bis 784. Auch Polyurethandispersionen (kationische, anionische und nichtionische) können eingesetzt werden.

Die vorgenannte wasserdurchläßige, vorzugsweise filmbildende Beschichtung aus Polymer wird üblicherweise auf wenigstens eine der beiden Treibmittelkomponenten durch ein Coating aufgebracht. Derartige Coatingverfahren sind dem Fachmann allgemein bekannt. Deshalb werden hier auch nur beispielsweise typische Coatingvorrichtungen, beispielsweise ein Dragierkessel, ein Tumbler, eine Wirbelschicht oder ein Kugelcoater genannt. Eine Übersicht über den Stand der Coatingtechnik in der Lebensmitteltechnologie gibt beispielsweise ein Aufsatz in der Firmenschrift von Haarmann und Reimer, "Contakt", Heft 57, Seite 4-8 sowie Heft 58, Seite 3-7. Hieraus ergibt sich, daß die für das Coating eingesetzten Lösungen üblicherweise in Mengen von etwa 10 bis 40 % eingesetzt werden. Beim Einsatz synthetischer Polymere sind Lösungen mit 5 bis 80 Gew.-% üblich.

Nach einer bevorzugten Ausführungsform der vorliegenden Erfindung setzt man in der Zusammensetzung zur Erzeugung von Leichtgips ein Treibmittel ein, welches verzögert Kohlendioxidgas, Sauerstoffgas, Wasserstoffgas, Distickstoffoxidgas, ein Edelgas oder Stickstoffgas entwickelt.

Soweit bei dem vorgannnten Treibmittel ein Edelgas entwickelt werden soll, so setzt man hierzu Edelgase, wie beispielsweise Argon in Einschlußverbindungen ein. Beispielhaft sei hier Hydrochinon genannt, welches Käfiggitter bildet, in denen nicht nur Edelgase, sondern auch Sauerstoff Platz findet. Derartige Einschlußverbindungen können so konstruiert werden, daß hieraus verzögert Gas freigesetzt wird.

Nach einer bevorzugten alternativen Ausführungsform der vorliegenden Erfindung enthält die Zusammensetzung zur Erzeugung von Leichtgips als Treibmittel eine saure organische oder anorganische feste Komponente, die mit einer wasserdurchläßigen, vorzugsweise filmbildenden Beschichtung versehen ist und wobei der teilchenförmige Gips ein Gips ist, der wenigstens 1 mg Carbonat pro Gramm Gips enthält.

Derartige carbonathaltige Gipse kommen entweder in der Natur vor, wie beispielsweise der Naturanhydrit in Form der Gesteine Trias und Kolpa, die einen Prozentsatz an Calciumcarbonat und Magnesiumcarbonat von insgesamt 2,5% aufweisen, der Rauchgasgips mit einem Caciumcarbonatanteil von 1 Gew.-% oder können durch Carbonatzugabe carbonathaltig eingestellt werden. Eine Übersicht über Gips als Naturrohstoff und Reststoff technischer Prozesse gibt der Aufsatz in "Chemie in unserer Zeit", 19. Jahrgang 1985, Nr. 4 Seite 137 bis 143. Der Gehalt an Carbonaten kann je nach Steinbruch von 0 bis max. 5 % variieren.

Nach einer weiteren bevorzugten Ausführungsform besteht die erfindungsgemäße Zusammensetzung aus einem Treibmittel mit zwei Bestandteilen, von denen wenigstens eine Komponente eine saure organische feste Komponente enthält, die ausgewählt ist aus organischen Säuren oder Phenolen oder eine anorganische feste Komponente, die ausgewählt ist aus Säuren oder sauren Salzen dieser Verbindung, die gegebenenfalls eine wasserdlurchläßige, vorzugsweise filmbildende Beschichtung aufweist.

Nach einer weiteren bevorzugten Ausführungsform weist die erfindungsgemäße Zusammensetzung eine Komponente des Treibmittels auf, die eine gasentwickelnde feste Komponente enthält, die ausgewählt ist aus Metallpulvern wie beispielsweise Magnesiumpulver, Aluminiumpulver, Azoverbindungen, Carbonaten, Hydrogencarbonaten, Sesquicarbonaten, Peroxiden, Perboraten, Percarbonaten, Aziden oder Hydriden, die gegebenenfalls eine wasserentfernbare, filmbildende Beschichtung aufweist. Soweit in der erfindungsgemäßen Zusammensetzung das Treibmittel zwei Komponenten enthält, weist hier bevorzugt die saure feste Komponente eine wasserentfernbare Beschichtung auf. Hierbei ist es weiter bevorzugt, daß die saure Komponente im Treibmittel eine organische Säure enthält, die vorzugsweise ausgewählt ist aus Hydroxycarbonsäuren wie Citronensäure, Weinsäure oder Apfelsäure, Ascorbinsäure oder Glucosesäure, Dimethylolpropionsäure usw. oder Mischungen hiervon.

Bei den vorgenannten Treibmitteln, die Gas entwickeln, ist es bevorzugt, daß es sich hierbei um eine Kohlendioxidgas oder ein Sauerstoffgas freisetzende feste Verbindung handelt, die ausgewählt ist aus Carbonaten, Hydrogencarbonaten, Sesqui-carbonaten, Peroxiden, Perboraten und Percarbonaten von ein- bis vierwertigen Kationen, insbesondere Alkali- und Erdalkalimetallen, insbesondere von Natrium, Kalium, Magnesium, Calcium oder Barium.

Wird bei der erfindungsgemäßen Zusammensetzung nicht nur auf ein Treibmittel Wert gelegt, welches verzögert Gas erzeugt, sondern soll darüber hinaus noch ein Leichtgips mit einer hohen Festigkeit und einer hohen Homogenität erhalten werden, so muß die Zusammensetzung weiterhin, bezogen auf die trockene Gesamtmischung, 0,5 bis 50 Gew.-% wenigstens eines wasserlöslichen, wasserdispergierbaren oder wasserdispergierten Polymers enthalten. Bei derartigen Polymeren kann es sich beispielsweise um ein Redispersionspulver handeln bzw. um eine Polymerdispersion, die beim Anmischen mit Wasser oder statt Wasser hinzugegeben wird. Hierzu sind alle Dispersionen geeignet, die mit Gips über die entsprechende Verarbeitungszeit eine stabile Mischung ergeben (z. B. Acrylat-, Vinylacetat-, Urethan-, Amid- Dispersionen, Copolymere und Mischungen). Weiter kann es sich bei derartigen Polymeren um fettchemische Polymere handeln. Beispielhaft sei ein Umsetzungsprodukt eines Sojaölepoxids mit Ethylendiamin mit einem mittleren Molekulargehalt von etwa 30.000 g/mol genannt. Weiterhin kann es sich bei derartigen Polymeren auch um das vorgehend definierte wasserentfernbare, vorzugsweise filmbildende organische Polymer handeln.

Bei einem derartigen Redispersionspulver handelt es sich vorzugsweise um ein Vinylacetat oder um ein Vinylacetat-Copolymeres, beispielsweise ein Ethylen-Vinylacetat. Weiter kann es sich bei einem derartigen Redispersionspulver um ein wasserlösliches, wasserdipergierbares oder wasserdispergiertes Polymer auf Basis von Acrylat oder eines Acrylatcopolymeren wie beispielsweise Styrol-Acrylat oder Styrol-Butadien-Acrylat handeln. Weiterhin geeignet für diesen Zweck ist Naturkautschuk, Polychloropren, Polyurethan und Polyamid. Auch eine Mischung der vorgenannten Polymere kann erfindungsgemäß als Kohesionsmittel ersetzt werden.

In der erfindungsgemäßen Zusammensetzung wird als Hauptkomponente ein Gips als Anhydrit oder Halbhydrat mit allen vorkommenden chemischen Modifikationen (α- und β-Halbhydrat, Anhydrit I, II, III) auf Basis von Naturgips, Chemiegips eingesetzt. Prinzipiell können diese hydraulisch abbindenden Versionen auf Basis des CaSO₄ sowohl rein als auch in Mischung vorliegen.

Bei dem Naturgips kann üblicherweise ein β-Gips, wie er über das Drehofenverfahren oder das Großkocherverfahren erhalten wird, eingesetzt werden. Einen entsprechenden Mehrphasengips erhält man über das Rostbandofenverfahren und einen α-Gips über das Autoklav-Verfahren.

Bei den in Form von Chemiegipsen eingesetzten Gipstypen erhält man den β-Gips nach dem Drehofenverfahren nach Knauf, dem Großkocherverfahren nach Knauf sowie nach dem Großkocherverfahren ohne Umkristallisation. Einen entsprechenden Mehrphasengips erhält man als Chemiegips nach dem Großbrandaggregatverfahren nach Knauf, und einen α-Gips nach dem Autoklav-Verfahren nach Giulini.

In der heutigen Zeit fällt allerdings ein großer Teil des Gipses aus der Rauchgasentschwefelung an, wo er über das Bischoff-Verfahren, das Saarberg-Hölter-Verfahren sowie das Bergbau-Forschungs-Verfahren, beispielsweise 1990 etwa 2 Mio. Tonnen Rückstandsgips erzeugt wurden. Hier hat insbesondere das α-Halbhydrat aus REA-Gips (REA = Rauchgasentschwefelungsanlage) besondere Bedeutung erlangt. Dieser schwach carbonathaltige Gips wird z. B. dann eingesetzt, wenn die saure Treibstoffkomponente oder beide zur Treibgas notwendigen Komponenten (Zusatzcarbonat und saure Komponente) beschichtet vorliegen.

In den erfindungsgemäßen Zusammensetzungen liegt Gips der vorgenannten Provenienzen als Hauptprodukt in Mengen von 20 bis 99,9 Gew.-%, vorzugsweise 50 bis 98 Gew.-%, bezogen auf den anorganischen Bindemittelanteil der Trockenmischung, vor.

Weitere Bestandteile der erfindungsgemäßen gipshaltigen Zusammensetzungen sind beispielsweise übliche Füll-, Hilfs- und Zusatzstoffe, die je nach Verwendungszweck variieren.

Dies sind zunächst mineralische und/oder anorganische Füllstoffe, wie z. B. Tone, Sand, Kies, Zement, Schlacke, Glas, Kieselgele, Sulfate (z. B. Calciumsulfatdihydrat), Oxide (z. B. Magnesiumoxid, Calciumoxid), Glas- und Mineralfasern, Kunststoffasern, Mikrohohlkugeln, organische Leichtfüllstoffe (z. B. Polystyrolschaum), Granulate (feingemachten) aus Recyclinganlagen, Papierpulver, Stärkepulver, Holzspäne und - mehle, Cellulosefasern, usw. Auch Konservierungsmittel, Rostschutzmittel und Farbstoffe und Mittel, die die Feuerfestigkeit erhöhen wie z. B. Vermiculit, Aluminium-oder Magnesium-hydroxid bzw. organische Flammschutzmittel kommen als Additive in Frage.

Weitere Bestandteile der erfindungsgemäßen Gipszusammensetzung sind benetzend wirkende Substanzen, die den Wasserbedarf herabsetzen und üblicherweise Verflüssiger genannt werden. Beispiele sind Alkylarylsulfonate, ligninsulfonsaure Salze oder Melaminharze. Eine Übersicht hierüber gibt beispielsweise der Artikel in "Zement, Kalk, Gips", Band 21, Seite 415 bis 419 (1968). Diese Verflüssiger werden üblicherweise in Mengen von 0 bis 10 % der erfindungsgemäßen Zusammensetzung hinzugefügt und reduzieren oftmals durch den niedrigeren Wassergehalt die späte Trockenzeit der abgebundenen Gipsformulierungen.

Auch eine Erhöhung des Wasserbedarfs ist möglich durch Zusatz von flockend wirkenden Stoffen, beispielsweise Polyethylenoxiden, wie sie beispielsweise im GB-A-1049184 beschrieben sind. Diese Hilfsstoffe können in Mengen von 0 bis 10 Gew.-%, bezogen auf die Trockenmischung, zugegeben werden.

Die Stabilisierung eines Wasser-Gips-Breis, um eine Sedimentation oder Entmischung zu vermeiden, gelingt durch Zusatz von verdickend wirkenden Chemikalien, beispielsweise Cellulose- und Stärkeethern. Diese beeinflussen den Wasserbedarf kaum. Diese Verdicker werden der erfindungsgemäßen Trockenmischung in Mengen von 0 bis 5 Gew.-%, bezogen auf die Trockenmischung, zugesetzt. Auch Polymerdispersionen können dem Gips, wie schon erwähnt, beim Anrühren zugesetzt werden, insbesondere, um Elastizität und Haftung zu verbessern.

Weiterhin können die erfindungsgemäßen Zusammensetzungen Hilfsstoffe enthalten, die als Beschleuniger wirken. Dies sind insbesondere viele anorganische Säuren und ihre Salze, insbesondere Schwefelsäure und ihre Salze. Eine besondere Stellung nimmt hierbei das Calciumsulfatdihydrat ein, welches in feiner Verteilung stark beschleunigend wirkt und deshalb beim Brennen von Rohgips vollständig entfernt werden muß. Die beschleunigende Wirkung dieser Substanzen beruht meistens auf einer Erhöhung der Löslichkeit und der Lösungsgeschwindigkeit des gebrannten Gipses sowie auf einer Erhöhung der Keimbindungsgeschwindigkeit.

Weitere Hilfsstoffe in der erfindungsgemäßen gipshaltigen Zusammensetzung sind bekannte Verzögerer, die den Versteifungs- und Erhärtungsvorgang verlangsamen. Zu ihnen gehören vor allem organische Säuren und ihre Salze sowie organische Kolloide, die z. B. auch als Abbauprodukte bei der Hydrolyse von hochmolekularen Naturstoffen, beispielsweise Eiweißstoffen entstehen, aber auch Salze der Phosphorsäure oder der Borsäure. Auch Dextrine sowie Eibischwurzel kommen in Frage. Der Mechanismus der Verzögerung ist verschieden. Höhermolekulare Kolloide verlängern die Induktionsperiode, da sie Keimgifte sind; andere Verzögerer verlangsamen die Lösungsgeschwindigkeit des Halbhydrats und das Wachstum der Dihydrat-Kristalle. Eine Verzögerung von Anhydrit II ist meist nicht von praktischem Interesse, da dieser bereits langsam genug in Dihydrat übergeht und meist beschleunigt wird. Der Anteil dieser Komponente in den erfindungsgemäßen Gipszusammensetzungen kann 0 bis 5 Gew.-%, bezogen auf die Trockenmischung, ausmachen.

Die Menge des eingesetzten Wassers hängt, wie dem Fachmann bekannt, von der Art des eingesetzten Gipsausgangsmaterials ab, d. h., zur Erzielung eines fließfähigen Breis von gleicher Konsistenz benötigt ein Drehofen-β-Gips mehr als ein Kochergips, dieser mehr als ein Mehrphasengips und dieser wiederum mehr als ein Autoklavengips. Die Wasserrnenge hat darüber hinaus auch einen wesentlichen Einfluß sowohl auf das Raumgewicht wie auch auf die Festigkeit des entstehenden Gipsprodukts. α-Gipse, die mit ganz geringen Mengen Wasser formbar sind, ergeben hier ohne spezielle Maßnahmen Gipsprodukte von hohem Raumgewicht und hoher Festigkeit, die wegen ihrer nicht gewollten Sprödigkeit in der Bauindustrie für viele Anwendungen vermieden werden. β-Gipse und Mehrphasengipse benötigen für eine fließfähige Konsistenz mehr Wasser als α-Gipse. Sie ergeben deshalb Gipsprodukte mittlerer Festigkeit und höherer Elastizität bei geringeren Raumgewichten, wie sie in der Bauindustrie breit verwendet werden.

Die vorliegende Erfindung betrifft weiter eine Zusammensetzung der vorgenannten Art, die neben teilchenförmigem Gips in Form von Anhydrit und / oder Halbhydrat sowie gaserzeugendem Mittel weiterhin
0 bis 45 % Füllstoffe (und Fasern, Leichtfüllstoffe u.s.w.),
0 bis 2 % eines Benetzungsmittels,
0 bis 5 % eines Verflüssigers,
0 bis 5 % eines Beschleunigungsmittels,
0 bis 5 % eines Verzögerungsmittels,
0 bis 5 % eines Hydrophobierungsmittels,
0 bis 5 % eines Weichmachers,
jeweils bezogen auf die Gesamtmischung, enthält.

Nach einer bevorzugten Ausführungsform enthält die erfindungsgemäße Zusammensetzung der vorgenannten Art als Hydrophobierungsmittel ein Polysiloxan, ein Wax (in Reinform, dispergiert oder auf einem Trägermaterial adsorbiert) oder ein fettchemisches Additiv (das sowohl als Hydrophobierungsmittel als auch als Polymerverstärker wirksam sein kann), wobei das fettchemische Additiv ausgewählt ist aus wenigstens einem wenigstens eine Carboxylgruppe enthaltenden Fettstoff, der mindestens 8 Kohlenstoffatome aufweist und/oder dessen Salz, mit einer Molmasse von 143 bis 20.000, wenigstens einem wenigstens eine Hydroxylgruppe enthaltenden Fettstoff, der mindestens 8 Kohlenstoffatome aufweist, mit einer Molmasse von 130 bis 20.000, wenigstens einem wenigstens eine Estergruppe enthaltenden Fettstoff, wobei der Säureteil und / oder der Alkoholteil mindestens 8 Kohlenstoffatome aufweist, mit einer Molmasse von 158 bis 20.000, wenigstens einem wenigstens eine Ethergruppe enthaltenden Fettstoff, wobei wenigstens einer der beiden Etherreste mindestens 8 Kohlenstoffatome aufweist, mit einer Molmasse von 144 bis 20.000, wenigstens einem wenigstens eine Aminogruppe oder ein quaternäres Ammoniumsalz enthaltenden Fettstoff, wobei wenigstens eine der 3 bzw. 4 um das Stickstoffatom angeordneten Gruppen mindestens 8 Kohlenstoffatome aufweist, mit einer Molmasse von 129 bis 20.000, wenigstens einem wenigstens eine Amidgruppe enthaltenden Fettstoff, wobei der Säurerest des Amides mindestens 8 Kohlenstoffatome aufweist, mit einer Molmasse von 157 bis 20.000, wenigstens einem wenigstens eine Epoxidgruppe enthaltenden Fettstoff, wobei dieser mindestens 8 Kohlenstoffatome aufweist, mit einer Molmasse von 128 bis 20.000. wenigstens einem wenigstens eine Anhydridgruppe enthaltenden Fettstoff, wobei dieser mindestens 8 Kohlenstoffatome aufweist, mit einer Molmasse von 210 bis 20.000, wenigstens einem phosphororganischen Fettstoff, der mindestens 8 Kohlenstoffatome aufweist, mit einer Molmasse von 193 bis 20.000, wenigstens einem bororganischen Fettstoff, der mindestens 8 Kohlenstoffatome aufweist, mit einer Molmasse von 174 bis 20.000, wenigstens einem schwefelorganischen Fettstoff, der mindestens 8 Kohlenstoffatome aufweist, mit einer Molmasse von 164 bis 20.000, sowie wenigstens einem wenigstens eine Urethangruppe aufweisenden Fettstoff, der mindestens 8 Kohlenstoffatome aufweist, mit einer Molmasse von 213 bis 20.000.

Der vorliegenden Erfindung liegt weiterhin die Aufgabe zugrunde, ein Verfahren zur Herstellung des verzögert gaserzeugenden Treibmittels der vorgenannten Art bereitzustellen, welches dadurch gekennzeichnet ist, daß man entweder eine saure Komponente oder eine gasentwickelnde Komponente oder beide Komponenten getrennt voneinander mit einer Wasser enthaltenden Dispersion oder Lösung, die wenigstens ein synthetisch modifiziertes Polysaccharid oder ein synthetisches Polymer der vorbeschriebenen Art enthält, dieses für eine die filmbildende Beschichtung ausreichende Zeit kontaktiert und gegebenenfalls überschüssiges Lösemittel entfernt. Eine derartige filmbildende Beschichtung wird üblicherweise nach einem dem Fachmann bekannten Coatingverfahren, beispielsweise in der Wirbelschicht, in einem Tumbler, in einem Dragierkessel oder in einem Kugelcoater durchgeführt.

Alternativ kann die Herstellung des verzögert Gas entwickelnden Treibmittels welches im Rahmen der erfindungsgemäßen Zusammensetzungen eingesetzt werden kann auch so erfolgen, daß man die saure Komponente und/oder die gasentwickelnde Komponente zusammen mit einer ein nicht wäßriges Lösemittel enthaltenden Dispersion oder Lösung, die wenigstens ein synthetisch modifiziertes Polysaccharid oder ein synthetisches Polymer der vorgenannten Art enthält oder aus der vorgenannten Substanz besteht für eine die vorzugsweise filmbildende Beschichtung ausreichende Zeit kontaktiert und gegebenenfalls überschüssige Lösemittel entfernt.

Unter nicht wäßrigen Lösemitteln im Sinne der vorliegenden Erfindung versteht man solche organischen Lösemittel die sowohl gegenüber der sauren Komponente wie gegenüber der gasentwickelnden Komponente inert sind, so daß es nicht zu einer vorherigen Gasentwicklung kommen kann. Beispiele hierfür sind im wesentlichen wasserfreie hydrophile Lösemittel für die vorgenannten insbesondere synthetischen Polymeren.

Nach einer weiteren alternativen Ausführungsform kann die Beschichtung der Komponenten auch in der Weise erfolgen, daß als wasserdurchläßige, vorzugsweise filmbildende Beschichtung eine Substanz von wachsartiger Konsistenz eingesetzt wird welche bei einer Kontaktierung beispielsweise in Form eines Vermahlens sowohl auf die saure Komponente wie auf die gasentwickelnde Komponente eine Beschichtung aufbringt, die verzögert wasserdurchläßig ist und insofern verzögert Gas erzeugen kann.

Der vorliegenden Erfindung liegt in einer bevorzugten Ausführungsform ferner die Aufgabe zugrunde, die vorgenannte Zusammensetzung in einer Verpackung zu verwenden, wobei der teilchenförmige abbindefähige Gips, das oder die Treibmittel, die Hilfs- und Zusatzstoffe zusammen vorliegen, wobei das Verpackungsvolumen so gewählt ist, daß wenigstens eine zum Abbinden ausreichende Menge einer wasserenthaltenden Flüssigkeit zugefügt werden kann.

Der vorliegenden Erfindung liegt weiterhin die Aufgabe zugrunde, die erfindungsgemäßen Zusammensetzungen zur Herstellung von Ortschaum bzw. Fugenschaum einzusetzen. Unter diesem Begriff versteht man einen Schaum, der am Verwendungsort, also an Ort und Stelle, erzeugt wird. Vorzugsweise setzt man derartigen Ortschaum als Montageschaum, zum Ausschäumen und zum Ausgießen von Hohlräumen oder Isolationsschaum im Innen- und Außenbereich ein. Mit besonderem Vorzug können derartige Schäume auch insbesondere dort eingesetzt werden, wo ein Fließen des noch nicht ausgeschäumten, bereits aufgetragenen Gemisches durch die Schwerkraft verhindert werden muß, beispielsweise zwischen Türzargen oder Fensterrahmen und Mauerwerk. Weitere Anwendungsmöglichkeit ist das Verfüllen von Hohlräumen, beispielsweise im Bergbau zur Verfestigung von lockerem Gestein oder zur Wärmeisolation und Schallisolation von Hausgeräten, Behältern, Dächern und Formgeräten mit komplexer Geometrie, in der Erdölindustrie und zur schnellen und verhältnismäßig einfachen Herstellung von Notunterkünften. Ebenfalls sehr gut geeignet sind derartige Zusammensetzungen zur Herstellung von Montageklebern sowie zur Herstellung von Modelliermassen.

Der vorliegenden Erfindung liegt weiterhin die Aufgabe zugrunde, die erfindungsgemäßen Zusammensetzungen für die Herstellung von Gipsprodukten niederer Dichte, also von 0,05 bis 1,5 g/cm³ vorzugsweise 0,1 bis 1,0 g/cm³ einzusetzen.

Dies sind einmal die sogenannten vorgefertigten, in Form hartgeschäumten Gipsbauteile, die in Form von Gipskartonplatten, Gipswandbauplatten, Wärmedämmplatten, Gipsbausteine und Gipsdeckenplatten in der Bauindustrie vielfache Verwendung finden. Eine Übersicht gibt hierüber Ullmann's Encyklopädie der technischen Chemie, Band 12, Seite 307 (1976). Weiterhin können die erfindungsgemäßen gipshaltigen Zusammensetzungen in Form von Putzgips eingesetzt werden und hierbei insbesondere als Dämmputz.

Die vorliegende Erfindung wird nachfolgend durch Ausführungsbeispiele näher erläutert, die das Treibmittel hier beispielhaft als ein verzögernd Kohlendioxidgas entwicklendes System zeigen.

Herstellungsbeispiel 1: (Zweikomponenten Treibmittel, hiervon eines beschichtet)

### A1. Beschichtete Treibmittelkomponente:

50 g Dimethylolpropionsäure werden mit einer Methylcellulose-Lösung von 10 g in 200 ml Wasser unter Rühren gemischt und das Wasser im Vakuum mittels eines Rotationsverdampfers entfernt. Nach dem Abkühlen erhält man ein rieselfähiges Pulver.

### B1. Unbeschichtete Treibmittelkomponente: Calciumcarbonat, technisch z.B. Calcilith 16B der Fa. Alpha-Calcit

### Anwendungsbeispiel 1:

### (Zweikomponenten-Treibmittel, carbonatfreies Gips-Halbhydrat und Wasser)

Aus 3 g A1, 11,5 g B1 sowie 50 g Gips (Calciumsulfat-Halbhydrat) der Marke Alfor (Hersteller Börgardts-Sachsenstein, Dichte 2,63, Schüttgewicht 900 g/l) wurde durch Vermischen eine Zusammensetzung zur Erzeugung von Leichtgips hergestellt. Diese Zusammensetzung wurde als G1 bezeichnet.

64,5 g G1 wurden unter kräftigem Rühren in 30 ml Wasser gegeben und innerhalb einer Zeit von bis zu 1 Minute in eine Gießform gegeben. Die Gasentwicklung und ein Aufschäumen auf ein Volumen von etwa 300 % begann nach etwa 2 Minuten und war nach etwa 5 Minuten beendet, die Härtung selbst war nach etwa 60 Minuten abgeschlossen.

Die Dichte des getrockneten Gipsschaums betrug 0,5 g/ml.

### Anwendungsbeispiel 2: (Zweikomponenten-Treibmittel, carbonatfreies Gips-Halbhydrat, wasserdispergierbares Polymer und Wasser)

Anwendungsbeispiel 1 wurde in der Weise variiert, daß 100 g der Zusammensetzung G1 5 g eines formstabilisierenden Polymers in Form von Polyvinylacetat-Redispersionspulver (Elotex® HM-110 der Elotex AG, Schweiz) zugefügt wurden. Diese Mischung wurde als G2 bezeichnet.

69,5 g G2 wurden unter kräftigem Rühren in 33 ml Wasser gegeben und innerhalb einer Zeit von bis zu 1 Minute in eine Gießform gegeben. Die Gasentwicklung und ein Aufschäumen auf ein Volumen von etwa 260 % begann nach etwa 2 Minuten und war nach etwa 5 Minuten beendet, die Härtung selbst war nach etwa 50 Minuten abgeschlossen. Durch das zugefügte Polymer wurde die Festigkeit des aufgeschäumten Gipsprodukts gegenüber Anwendungsbeispiel 1 deutlich verbessert. Die Dichte des luftrockenen Gipsformkörpers betrug 0,56 g/ml.

### Herstellungsbeispiel 2: (Einkomponenten-Treibmittel, beschichtet)

Nach der Methode von Herstellungsbeispiel 1 wurde eine beschichtete Dimethylolpropionsäure hergestellt, anstelle von Methylcellulose wurde allerdings eine gleiche Menge an Polyvinylalkohol als wasserlösliches Polymer verwendet.

### Anwendungsbeispiel 3:

### (Einkomponenten-Treibmittel, beschichtet, carbonathaltiges Gips-Halbhydrat, Wasser)

Aus 3 g A1 sowie 60 g Gips (Calciumsulfat-Halbhydrat, carbonathaltig) der Marke Alfor (Hersteller Borgardts, Carbonatgehalt 3 %, Dichte 2,63, Schüttgewicht ca. 900 g/l) wurde durch Vermischen eine Zusammensetzung zur Erzeugung von Leichtgips hergestellt. Diese Zusammensetzung wurde als G3 bezeichnet.

63 g G3 wurden unter kräftigem Rühren in 30 ml Wasser gegeben und innerhalb einer Zeit von bis zu 1 Minute in eine Gießform gegeben. Die Gasentwicklung und ein Aufschäumen auf ein Volumen von etwa 150 % begann nach etwa 2 Minuten und war nach etwa 4 Minuten beendet, die Härtung selbst war nach etwa 60 Minuten abgeschlossen.

Die Dichte des trockenen Gipsformkörpers betrug ca. 1,1 g/ml.

### Herstellungsbeispiel 3: (Zweikomponenten Treibmittel, beide gleichzeitig beschichtet.)

AB2. 30 g Dimethylolpropionsäure und 100 g Calciumcarbonat werden zusammen mit 10 g PEG 6000 in einer Kugelmühle mit einem Volumen von 1000 ml für 1 h vermahlen. Man erhält ein rieselfähiges Pulver.

### Anwendungsbeispiel 4: (Zweikomponenten-Treibmittel mit verzögerter Gasentwicklung, Gips-Halbhydrat, Wasser)

Aus 13 g AB2 sowie 50 g Gips (Calciumsulfat-Halbhydrat) der Marke Alfor gemäß Anwendungsbeispiel 1 wurde durch Vermischen eine Zusammensetzung zur Erzeugung von Leichtgips hergestellt. Diese Zusammensetzung wurde als G4 bezeichnet.

63 g G4 wurden unter kräftigem Rühren in 30 ml Wasser von 20 °C gegeben und innerhalb einer Zeit von bis zu 1 Minute in eine Gießform gegeben. Die Gasentwicklung und ein Aufschäumen auf ein Volumen von etwa 270 % begann nach etwa 1,5 Minuten und war nach etwa 3 Minuten beendet, die Härtung selbst war nach etwa 60 Minuten abgeschlossen. Die Dichte des luftrockenen Formkörpers betrug 0,55 g/ml.

## Patentansprüche

1. Zusammensetzung zur Erzeugung von Leichtgips, die als wesentliche Bestandteile teilchenförmigen abbindefähigen Gips in Form von Anhydrit und / oder Halbhydrat sowie wenigstens ein Treibmittel enthält, **dadurch gekennzeichnet**, daß das Treibmittel verzögert innerhalb von 1 min bis 24 h Gas erzeugt, und daß es mit wenigstens einer wasserdurchlässigen Beschichtung, sei es aus einem synthetisch modifizierten Polysaccharid oder einem synthetischen Polymer ausgewählt aus Polyvinylverbindungen, Polyacrylverbindungen, Poly-2-ethyloxyzolin, Polyurethan oder Polyelektrolyte, versehen ist.

2. Zusammensetzung nach Anspruch 1, **dadurch gekennzeichnet**, daß diese 0,1 bis 50 Gew.-%, bezogen auf die trockene Gesamtmischung, wenigstens eines Treibmittels zur verzögerten Gaserzeugung enthält.

3. Zusammensetzung nach Anspruch 1 oder 2, **dadurch gekennzeichnet**, daß das Treibmittel zur verzögerter Gaserzeugung aus wenigstens 2 Komponenten besteht, von denen wenigstens eine mit der wasserdurchlässigen Beschichtung versehen ist.

4. Zusammensetzung nach Anspruch 1 oder 2, **dadurch gekennzeichnet**, daß das Treibmittel zur verzögerten Gaserzeugung aus einer Komponente besteht, die mit der wasserdurchlässigen Beschichtung versehen ist.

5. Zusammensetzung nach Anspruch 3 oder 4, **dadurch gekennzeichnet**, daß die wasserdurchlässige Beschichtung wenigstens ein wasserquellbares, wasserredispergierbares oder wasserlösliches synthetisch modifiziertes Polysaccharid enthält.

6. Zusammensetzung nach Anspruch 3, 4 Oder 5, **dadurch gekennzeichnet**, daß die wasserdurchlässige Beschichtung filmbildend ist.

7. Zusammensetzung nach Anspruch 1 oder 2, **dadurch gekennzeichnet**, daß diese 1 bis 20 Gew.-%, bezogen auf die trockene Gesamtmischung, wenigstens eines Treibmittels zur verzögerten Gaserzeugung enthält.

8. Zusammensetzung nach Anspruch 1, **dadurch gekennzeichnet**, daß das synthetisch modifizierte Polysaccharid ein Celluloseether, Celluloseester, Stärkeester oder Stärkeether oder eine Mischung hiervon ist.

9. Zusammensetzung nach Anspruch 8, **dadurch gekennzeichnet**, daß der Celluloseether Methylcellulose, Hydroxymethylcellulose, Carboxymethylhydroxyethylcellulose, Hydroxypropylcellulose, Hydroxypropylmethylcellulose, Hydroxyethylmethylcellulose, Hydroxyethylcellulose, Cyanoethylcellulose, Ethylcellulose, Carboxymethylcellulose oder eine Mischung dieser Celluloseether, der Celluloseester Celluloseacetat, Celluloseacetobutyrat, Celluloseacetopropionat, Cellulosepropionat oder eine Mischung dieser Celluloseester, der Stärkeester Stärkenitrat, Stärkephosphat, Stärkexanthogenat, Stärkeacetat, Stärkesulfat, Stärkecitrat oder eine Mischung dieser Stärkeester, der Stärkeester Stärkecarboxymethylether, Hydroxyethylstärke, Hydroxypropylstärke, kationische Stärke oder eine Mischung dieser Stärkeether, oder eine Mischung der vorgenannten Verbindungen enthält.

10. Zusammensetzung nach Anspruch 1, **dadurch gekennzeichnet**, daß die wasserdurchlässige Beschichtung eine wasserentfernbare filmbildende Beschichtung ist, die mindestens ein synthetisches Polymer, ausgewählt aus den Polyvinylverbindungen Polyvinylalkohol, Polyvinylpyrrolidon, Polyvinylacetat/Crotonsäurecopolymerisaten, Polyvinylbutyral und aus den Polyacrylverbindungen Poly(meth)acrylestercopolymerisaten sowie Polyacrylamiden enthält.

11. Zusammensetzung nach Anspruch 1 oder 2, **dadurch gekennzeichnet**, daß das Treibmittel zur verzögerten Gaserzeugung Kohlendioxidgas, Stickstoffgas, Edelgas, Wasserstoffgas, Distickstoffoxidgas und / oder Sauerstoffgas entwickelt.

12. Zusammensetzung nach Anspruch 1 bis 2 oder 4 bis 13, **dadurch gekennzeichnet**, daß das Treibmittel eine saure organische oder anorganische feste Komponente enthält, die mit einer wasserdurchlässigen Beschichtung versehen ist und der teilchenförmige Gips ein Gips ist, der wenigstens 1 mg Carbonat pro g Gips enthält.

13. Zusammensetzung nach Anspruch 1, 2 bis 3 und 5 bis 11, **dadurch gekennzeichnet**, daß weinigstens eine Komponente des Treibmittel eine saure organische feste Komponente enthält, die ausgewählt ist aus organischen Säuren oder Phenolen; oder eine anorganische feste Komponente, die ausgewählt ist aus Säuren oder sauren Salzen dieser Verbindungen.

14. Zusammensetzung nach Anspruch 11, **dadurch gekennzeichnet**, daß wenigstens eine Komponente des Treibmittels eine ein gasentwickelnde feste Komponente enthält, die ausgewählt ist aus Metallpulvern, Azoverbindungen, Carbonaten, Hydrogencarbonaten, Sesquicarbonaten, Peroxiden, Perboraten, Percarbonaten, Aciden oder Hydriden.

15. Zusammensetzung nach Anspruch 13 oder 14, **dadurch gekennzeichnet**, daß das Treibmittel zwei Komponenten enthält, wobei die saure feste Komponente eine wasserdurchläßige Beschichtung aufweist.

16. Zusammensetzung nach Ansprüchen 13 oder 14, **dadurch gekennzeichnet**, daß das die saure Komponente im Treibmittel eine organische Säure enthält, die vorzugsweise ausgewählt aus Hydroxycarbonsäuren wie Citronensäure, Weinsäure oder Apfelsäure, Ascorbinsäure, Glucosesäure oder Dimethylolpropionsäure, oder Mischungen hiervon.

17. Zusammensetzung nach Anspruch 1 bis 16, **dadurch gekennzeichnet**, daß diese weiterhin, bezogen auf die trockene Gesamtmischung, 0,5 bis 20 Gew.-% wenigstens eines wasserlöslichen, wasserdispergierbaren oder wasserdispergierten Polymers enthält.

18. Zusammensetzung nach Anspruch 17, **dadurch gekennzeichnet**, daß das Polymer ein Redispersionspulver und/oder ein fettchemisches Polymer enthält.

19. Zusammensetzung nach Ansprüchen 17 und 18, **dadurch gekennzeichnet**, daß das wasserlösliche, wasserdispergierbare oder wasserdispergierte Polymer ein Vinylacetat oder ein Vinylacetat-Copolymeres, ein Acrylat, oder ein Acylat-Copolymer, Naturkautschuk, Polychloropren, Polyurethan, Polyamid oder Mischungen hieraus enthält.

20. Zusammensetzung nach vorstehenden Ansprüchen, **dadurch gekennzeichnet**, daß der abbindefähige teilchenförmige Gips in Mengen von 20 bis 99,9 Gew.-%, bezogen auf die Gesamtmischung, bevorzugt größer 50 Gew.-%, vorhanden ist.

21. Zusammensetzung nach vorstehenden Ansprüchen, **dadurch gekennzeichnet**, daß diese weiterhin
0 bis 45 % carbonatfreien Füllstoffe,
0 bis 2 % eines Benetzungsmittels,
0 bis 5 % eines Verflüssigers,
0 bis 5 % eines Beschleunigungsmittels,
0 bis 5 % eines Verzögerungsmittels,
0 bis 5 % eines Hydrophobierungsmittels,
0 bis 5 % eines Weichmachers,
jeweils bezogen auf die Gesamtmischung, enthält.

22. Zusammensetzung nach Anspruch 21, **dadurch gekennzeichnet**, daß das Hydrophobierungsmittel ein Polysiloxan, ein Wachs oder ein fettchemisches Additiv enthält, wobei das fettchemische Additiv ausgewählt ist aus
- wenigstens einem wenigstens eine Carboxylgruppe enthaltenden Fettstoff, der mindestens 8 Kohlenstoffatome aufweist und/oder dessen Salz, mit einer Molmasse von 143 bis 20.000,
- wenigstens einem wenigstens eine Hydroxylgruppe enthaltenden Fettstoff, der mindestens 8 Kohlenstoffatome aufweist, mit einer Molmasse von 130 bis 20.000,
- wenigstens einem wenigstens eine Estergruppe enthaltenden Fettstoff, wobei der Säureteil und / oder der Alkoholteil mindestens 8 Kohlenstoffatome aufweist, mit einer Molmasse von 158 bis 20.000,
- wenigstens einem wenigstens eine Ethergruppe enthaltenden Fettstoff, wobei wenigstens einer der beiden Etherreste mindestens 8 Kohlenstoffatome aufweist, mit einer Molmasse von 144 bis 20.000,
- wenigstens einem wenigstens eine Aminogruppe oder ein quaternäres Ammoniumsalz enthaltenden Fettstoff, wobei wenigstens eine der 3 bzw. 4 um das Stickstoffatom angeordneten Gruppen mindestens 8 Kohlenstoffatome aufweist, mit einer Molmasse von 129 bis 20.000,
- wenigstens einem wenigstens eine Amidgruppe enthaltenden Fettstoff, wobei der Säurerest des Amides mindestens 8 Kohlenstoffatome aufweist, mit einer Molmasse von 157 bis 20.000,
- wenigstens einem wenigstens eine Epoxidgruppe enthaltenden Fettstoff, wobei dieser mindestens 8 Kohlenstoffatome aufweist, mit einer Molmasse von 128 bis 20.000,
- wenigstens einem wenigstens eine Anhydridgruppe enthaltenden Fettstoff, wobei dieser mindestens 8 Kohlenstoffatome aufweist, mit einer Molmasse von 210 bis 20.000,
- wenigstens einem phosphororganischen Fettstoff, der mindestens 8 Kohlenstoffatome aufweist, mit einer Molmasse von 193 bis 20.000,
- wenigstens einem bororganischen Fettstoff, der mindestens 8 Kohlenstoffatome aufweist, mit einer Molmasse von 174 bis 20.000,
- wenigstens einem schwefelorganischen Fettstoff, der mindestens 8 Kohlenstoffatome aufweist, mit einer Molmasse von 164 bis 20.000 und
- wenigstens einem wenigstens eine Urethangruppe aufweisenden Fettstoff, der mindestens 8 Kohlenstoffatome aufweist, mit einer Molmasse von 213 bis 20.000.

23. Zusammensetzung nach einem der vorangegangenen Ansprüche, **dadurch gekennzeichnet**, daß man zur Herstellung des verzögert gaserzeugenden Treibmittels nach den Ansprüchen 1 bis 16 entweder eine saure Komponente oder eine gasentwickelnde Komponente oder beide Komponenten getrennt voneinander mit einer Wasser enthaltenden Dispersion oder Lösung, die wenigstens eine wasserdurchlässige Beschichtungssubstanz nach Ansprüchen 1, 5, 6, 8, 9 oder 10 enthält, für die Beschichtung ausreichende Zeit kontaktiert.

24. Zusammensetzung nach Anspruch 23, **dadurch gekennzeichnet**, daß man eine filmbildende Beschichtung durch ein Coatingverfahren aufbringt.

25. Zusammensetzung nach einem der vorangegangenen Ansprüche, **dadurch gekennzeichnet**, daß man zur Herstellung des verzögert Gas erzeugenden Treibmittels nach den Ansprüchen 1 bis 16 die saure und/oder gasentwickelnde Komponente mit einer ein nichtwäßriges Lösemittel enthaltenden Dispersion oder Lösung, die wenigstens eine wasserdurchlässige Beschichtungssubstanz nach den Ansprüchen 1, 5, 6, 8, 9 oder 10 enthält oder die entsprechende Substanz selbst für eine zur Beschichtung ausreichende Zeit kontaktiert.

26. Verwendung der Zusammensetzung nach Ansprüchen 1 bis 22 in einer Verpackung, wobei der teilchenförmige abbindefähige Gips, das oder die Treibmittel, die Hilfs- und Zusatzstoffe zusammen vorliegen, wobei das Verpackungsvolumen so gewählt ist, daß wenigstens eine zum Abbinden ausreichende Menge einer wasserenthaltenden Flüssigkeit zugefügt werden kann.

27. Verwendung der Zusammensetzung nach Ansprüchen 1 bis 22 zur Herstellung von Ortschaum, insbesondere zur Herstellung von Montageschaum, zum Ausschäumen oder Ausgießen von Hohlräumen oder Isolationsschaum im Innen- und Außenbereich.

28. Verwendung der Zusammensetzung nach Ansprüchen 1 bis 22 zur Herstellung von Montageklebern oder von Modelliermassen.

29. Verwendung der Zusammensetzung nach Ansprüchen 1 bis 22 zur Herstellung von Gipsprodukten mit Dichten von 0,05 bis 1,5 g/cm³.

30. Verwendung nach Anspruch 29, **dadurch gekennzeichnet**, daß die Gipsprodukte hartgeschäumte Formteile wie Gipskartonplatten, Wärmedämmplatten, Gipswandbauplatten, Gipsbausteine und Gipsdeckenplatten sind oder das Gipsprodukt ein Dämmputz ist.

## Claims

1. A composition for the production of light gypsum which contains particulate, setting gypsum in the form of anhydrite and/or hemihydrate and at least one blowing agent as key components, **characterized in that** the blowing agent generates gas with delay in 1 minute to 24 h and in that it is provided with at least one water-permeable coating of a synthetically modified polysaccharide or a synthetic polymer selected from polyvinyl compounds, polyacrylic compounds, poly-2-ethyloxazoline, polyurethane or polyelectrolytes.

2. A composition as claimed in claim 1, **characterized in that** it contains 0.1 to 50% by weight, based on the dry mixture as a whole, of at least one blowing agent for the delayed generation of gas.

3. A composition as claimed in claim 1 or 2, **characterized in that** the blowing agent for the delayed generation of gas consists of at least two components of which at least one is provided with the water-permeable coating.

4. A composition as claimed in claim 1 or 2, **characterized in that** the blowing agent for the delayed generation of gas consists of one component which is provided with the water-permeable coating.

5. A composition as claimed in claim 3 or 4, **characterized in that** the water-permeable coating contains at least one water-swellable, water-redispersible or water-soluble, synthetically modified polysaccharide.

6. A composition as claimed in claim 3, 4 or 5, **characterized in that** the water-permeable coating is film-forming.

7. A composition as claimed in claim 1 or 2, **characterized in that** it contains 1 to 20% by weight, based on the dry mixture as a whole, of at least one blowing agent for delayed gas generation.

8. A composition as claimed in claim 1, **characterized in that** the synthetically modified polysaccharide is a cellulose ether, cellulose ester, starch ester or starch ether or a mixture thereof.

9. A composition as claimed in claim 8, **characterized in that** the cellulose ether contains methyl cellulose, hydroxymethyl cellulose, carboxymethylhydroxyethyl cellulose, hydroxypropyl cellulose, hydroxypropylmethyl cellulose, hydroxyethylmethyl cellulose, hydroxyethyl cellulose, cyanoethyl cellulose, ethyl cellulose, carboxymethyl cellulose or a mixture of these cellulose ethers; the cellulose ester contains cellulose acetate, cellulose acetobutyrate, cellulose acetopropionate, cellulose propionate or a mixture of these cellulose esters; the starch ester contains starch nitrate, starch phosphate, starch xanthogenate, starch acetate, starch sulfate, starch citrate or a mixture of these starch esters; the starch ether contains starch carboxymethyl ether, hydroxyethyl starch, hydroxypropyl starch, cationic starch or a mixture of these starch ethers or a mixture of the compounds mentioned above.

10. A composition as claimed in claim 1, **characterized in that** the water-permeable coating is a water-soluble film-forming coating which contains at least one synthetic polymer selected from the polyvinyl compounds, polyvinyl alcohol, polyvinyl pyrrolidone, polyvinyl acetate/crotonic acid copolymers, polyvinyl butyral and from the polyacrylic compounds, poly(meth)acrylate copolymers and polyacrylamides.

11. A composition as claimed in claim 1 or 2, **characterized in that** the blowing agent for the delayed generation of gas generates carbon dioxide gas, nitrogen gas, noble gas, hydrogen gas, dinitrogen oxide gas and/or oxygen gas.

12. A composition as claimed in claims 1 and 2, or 4 to 13, **characterized in that** the blowing agent contains an acidic organic or inorganic solid component which is provided with a water-permeable coating and the particulate gypsum is a gypsum which contains at least 1 mg of carbonate per g of gypsum.

13. A composition as claimed in claims 1, 2 and 3 and 5 to 11, **characterized in that** at least one component of the blowing agent contains an acidic organic solid component selected from organic acids or phenols; or an inorganic solid component selected from acids or acidic salts of these compounds.

14. A composition as claimed in claim 11, **characterized in that** at least one component of the blowing agent contains a gas-generating solid component selected from metal powders, azo compounds, carbonates, hydrogen carbonates, sesquicarbonates, peroxides, perborates, percarbonates, azides or hydrides.

15. A composition as claimed in claim 13 or 14, **characterized in that** the blowing agent contains two components, the acidic solid component having a water-permeable coating.

16. A composition as claimed in claim 13 or 14, **characterized in that** the acidic component of the blowing agent contains an organic acid preferably selected from hydroxycarboxylic acids, such as citric acid, tartaric acid or malic acid, ascorbic acid, glucose acid or dimethylol propionic acid or mixtures thereof.

17. A composition as claimed in claims 1 to 16, **characterized in that**, based on the dry mixture as a whole, it additionally contains 0.5 to 20% by weight of at least one water-soluble, water-dispersible or water-dispersed polymer.

18. A composition as claimed in claim 17, **characterized in that** the polymer contains a redispersion powder and/or an oleochemical polymer.

19. A composition as claimed in claims 17 and 18, **characterized in that** the water-soluble, water-dispersible or water-dispersed polymer is a vinyl acetate or vinyl acetate copolymer, an acrylate or an acrylate copolymer, natural rubber, polychloroprene, polyurethane, polyamide or mixtures thereof.

20. A composition as claimed in the preceding claims, **characterized in that** the particulate, setting gypsum is present in quantities of 20 to 99.9% by weight and preferably in quantities of more than 50% by weight, based on the mixture as a whole.

21. A composition as claimed in the preceding claims, **characterized in that** it additionally contains
0 to 45% of carbonate-free fillers,
0 to 2% of a surface-active agent,
0 to 5% of a wetting agent,
0 to 5% of an accelerator,
0 to 5% of a retarder,
0 to 5% of a hydrophobicizing agent,
0 to 5% of a plasticizer,
based in each case on the mixture as a whole.

22. A composition as claimed in claim 21, **characterized in that** the hydrophobicizing agent is a polysiloxane, a wax or an oleochemical additive, the oleochemical additive being selected from
- at least one at least C₈ fatty compound containing at least one carboxyl group and having a molecular weight of 143 to 20,000 and/or a salt thereof,
- at least one at least C₈ fatty compound containing at least one hydroxyl group and having a molecular weight of 130 to 20,000,
- at least one fatty compound containing at least one ester group and having a molecular weight of 158 to 20,000, the acid component and/or the alcohol component containing at least 8 carbon atoms,
- at least one fatty compound containing at least one ether group and having a molecular weight of 144 to 20,000, at least one of the two ether groups containing at least 8 carbon atoms,
- at least one fatty compound containing at least one amino group or one quaternary ammonium salt and having a molecular weight of 129 to 20,000, at least one of the three or four groups arranged around the nitrogen atom containing at least 8 carbon atoms,
- at least one fatty compound containing at least one amide group and having a molecular weight of 157 to 20,000, the acid component of the amide containing at least 8 carbon atoms,
- at least one at least C₈ fatty compound containing at least one epoxide group and having a molecular weight of 128 to 20,000,
- at least one at least C₈ fatty compound containing at least one anhydride group and having a molecular weight of 210 to 20,000,
- at least one at least C₈ organophosphorus fatty compound having a molecular weight of 193 to 20,000,
- at least one at least C₈ organoboron fatty compound having a molecular weight of 174 to 20,000,
- at least one at least C₈ organosulfur fatty compound having a molecular weight of 164 to 20,000 and
- at least one at least C₈ fatty compound containing at least one urethane group and having a molecular weight of 213 to 20,000.

23. A composition as claimed in any of the preceding claims, **characterized in that**, to produce the delayed gas-generating blowing agent claimed in claims 1 to 16, either an acidic component or a gas-generating component or both components separately from one another islare contacted with a water-containing dispersion or solution, which contains at least one water-permeable coating material according to claims 1, 5, 6, 8, 9 or 10, for a time sufficient for coating.

24. A composition as claimed in claim 23, **characterized in that** a film-forming coating is applied by a coating process.

25. A composition as claimed in any of the preceding claims, **characterized in that**, to produce the delayed gas-generating blowing agent claimed in claims 1 to 16, the acidic and/or gas-generating component is contacted with a dispersion or solution containing a non-aqueous solvent, which contains at least one water-permeable coating material according to claims 1, 5, 6, 8; 9 or 10, or the corresponding material itself is contacted for a time sufficient for coating.

26. The use of the composition claimed in claims 1 to 22 in a pack in which the particulate, setting gypsum, the blowing agent(s) and the auxiliaries and additives are present together, the volume of the pack being selected so that a water-containing liquid can be added at least in a quantity sufficient for setting

27. The use of the composition claimed in claims 1 to 22 for the production of in-situ foam, more particularly for the production of assembly foam, for filling voids with foam or for the production of insulating foam for both indoor and outdoor applications.

28. The use of the composition claimed in claims 1 to 22 for the production of assembly adhesives or modelling compounds.

29. The use of the composition claimed in claims 1 to 22 for the production of gypsum products with densities of 0.05 to 1.5 g/cm;.

30. The use claimed in claim 29, **characterized in that** the gypsum products are rigid-foam gypsum mouldings, such as sandwich type gypsum plasterboards, heat insulation boards, gypsum wallboards, gypsum partition blocks and gypsum ceiling boards or in that the gypsum product is an insulating plaster.

## Revendications

1. Composition pour la production de plâtre léger, qui contient comme constituants essentiels du plâtre particulaire apte à se lier sous forme d'anhydrite et/ou d'hémihydrates ainsi qu'au moins un porogène,
**caractérisée en ce que**
le porogène produit du gaz de façon retardée en 1 minute à 24 heures, et il est muni d'au moins un revêtement perméable à l'eau, qu'il s'agisse d'un polysaccharide synthétiquement modifié ou d'un polymère de synthèse choisi parmi les composés polyvinyliques, les composés polyacryliques, la poly-2-éthyl oxazoline, le polyuréthane ou les polyélectrolytes.

2. Composition selon la revendication 1,
**caractérisée en ce qu'**
elle contient de 0,1 à 50 % en poids, par rapport à l'ensemble du mélange sec, d'au moins un porogène pour la production retardée de gaz.

3. Composition selon la revendication 1 ou 2,
**caractérisée en ce que**
le porogène pour la production retardée de gaz est constitué d'au moins 2 composants, dont au moins un est un muni d'un revètement perméable à l'eau.

4. Composition selon la revendication 1 ou 2,
**caractérisée en ce que**
le porogène pour la production retardée de gaz est constitué d'un composant qui est muni d'un revêtement perméable à l'eau.

5. Composition selon la revendication 3 ou 4,
**caractérisée en ce que**
le revêtement perméable à l'eau contient au moins un polysaccharide de synthèse modifié gonflable à l'eau, dispersable à l'eau ou soluble dans l'eau.

6. Composition selon la revendication 3, 4 ou 5,
**caractérisée en ce que**
le revêtement perméable à l'eau est filmogène.

7. Composition selon la revendication 1 ou 2,
**caractérisée en ce qu'**
elle contient 1 à 20 % en poids, par rapport à l'ensemble du mélange sec, d'au moins un porogène pour la production retardée de gaz.

8. Composition selon la revendication 1.
**caractérisée en ce que**
le polysaccharide modifié par synthèse est un éther de cellulose, un ester de cellulose, un ester d'amidon ou un éther d'amidon, ou un mélange de ces corps.

9. Composition selon la revendication 8,
**caractérisée en ce que**
l'éther de cellulose est la méthylcellulose, l'hydoxyméthyl cellulose, la carborymethyl hydroxyéthyl cellulose, l'hydroxypropyl cellulose, l'hydroxypropyl méthyl cellulose, l'hydroxy éthyl méthyl cellulose, l'hydroxy éthyl cellulose, la cyanoéthyl cellulose, l'éthyl cellulose, la carboxy méthyl cellulose ou un mélange de ces éthers de cellulose, l'ester de cellulose est l'acétate de cellulose, l'acétobutyrate de cellulose, l'acétopropionate de cellulose, le propionate de cellulose ou un mélange de ces esters de cellulose, l'éther d'amidon, est le nitrate d'amidon, le phosphate d'amidon, le xanthogénate d'amidon, l'acétate d'amidon, le sulfate d'amidon, le citrate d'amidon ou un mélange de ces esters d'amidon, l'éther d'amidon est le carboxyméthyl éther d'amidon, l'hydroxyéthyl amidon, l'hydroxypropyl amidon, les amidons cationiques, ou un mélange de ces éthers d'amidon, ou un mélange des composés mentionnés ci-dessus.

10. Composition selon la revendication 1,
**caractérisée en ce que**
le revêtement perméable à l'eau est un revêtement filmogène que l'on peut enlever à l'eau, et qui contient au moins un polymère synthétique choisi parmi les composés polyvinylique, l'alcool polyvinylique, la polyvinyl pyrrolidone, les copolymères acétate de polyvinyle/acide crotonique, le polyvinyl butyral, et parmi les composés polyacryliques, les copolymères d'ester poly(méth)acryliques ainsi que les polyacrylamides.

11. Composition selon la revendication 1 ou 2,
**caractérisée en ce que**
le porogène pour la production retardée de gaz contient du dioxyde de carbone gazeux, de l'azote gazeux, un gaz noble, du gaz hydrogène, du dioxyde d'azote et/ou du gaz oxygène.

12. Composition selon la revendication 1 à 2 ou 4 à 13,
**caractérisée en ce que**
le porogène contient un composant solide organique ou inorganique acide qui est muni d'un revêtement perméable à l'eau, et le plâtre particulaire est un plâtre qui contient au moins 1 mg de carbonate par gramme de plâtre.

13. Composition selon la revendication 1, 2, 3 et 5 à 11,
**caractérisée en ce qu**'
au moins un composant du porogène contient un composant solide organique acide qui est choisi parmi les acides organiques ou les phénols, ou un composant solide inorganique qui est choisi parmi les acides ou les sels acides de ces composés.

14. Composition selon la revendication 11,
**caractérisée en ce qu**'
au moins un composant du porogène contient un composant solide dégageant du gaz, qui est choisi parmi les poudres métalliques, les composés azoïques, les carbonates, les carbonates acides, les sesquicarbonates, les peroxydes, les perborates, les percarbonates, les acides ou les hydrures.

15. Composition selon la revendication 13 ou 14,
**caracterisée en ce que**
le porogène contient deux composants, le composant solide acide présentant un revêtement perméable à l'eau.

16. Composition les revendications 13 ou 14,
**caractérisé en ce que**
le composant acide dans le porogène contient un acide organique qui est de préférence choisi parmi les acides hydroxy carboxyliques comme l'acide citrique, l'acide tartrique ou l'acide malique, l'acide ascorbique, l'acide glucosique ou l'acide diméthyl propionique, ou leurs mélanges.

17. Composition selon l'une quelconque des revendications 1 à 16,
**caractérisée en ce qu**'
elle contient en outre, par rapport à l'ensemble du mélange sec, de 0,5 à 20 % en poids d'au moins un polymère soluble dans l'eau, dispersable dans l'eau ou dispersé dans l'eau.

18. Composition selon la revendication 17,
**caractérisé en ce que**
le polymère contient une poudre de redispersion et/ou un polymère chimique gras.

19. Composition selon la revendication 17 ou 18,
**caractérisée en ce que**
le polymère soluble dans l'eau, dispersable dans l'eau ou dispersé dans l'eau contient un acétate de vinyle ou un copolymère acétate de vinyle, un acrylate ou un copolymère d'acrylate, du caoutchouc naturel, du polychloroprène, du polyuréthane, un polyamide ou des mélanges de ces corps.

20. Composition selon l'une quelconque des revendications précédentes,
**caractérisée en ce que**
le plâtre particulaire apte à former des liaisons est présent en quantités de 20 à 99,9 % en poids, par rapport à l'ensemble du mélange, de préférence à plus de 50 % en poids.

21. Composition selon les revendications précédentes,
**caractérisée en ce qu'**
elle contient en outre
0 à 45 % de charges dépourvues de carbonate.
0 à 2 % d'un agent mouillant,
0 à 5 % d'un agent liquéfiant,
0 à 5 % d'un agent d'accélération,
0 à 5 % d'un agent retardant,
0 à 5 % d'un agent d'hydrophobisation,
0 à 5 % d'un plastifiant,
Toujours par rapport à l'ensemble du mélange.

22. Composition selon la revendication 21,
**caractérisée en ce que**
l'agent d'hydrophobisation contient un polysiloxane, une cire ou un additif chimique gras choisi parmi
- au moins un solide contenant au moins un groupe carboxyle, présentant au moins 8 atomes de carbone, et/ou son sel, avec une masse molaire de 143 à 20 000,
- au moins un solide contenant au moins un groupe hydroxyle, présentant au moins 8 atomes de carbone, avec une masse molaire de 130 à 20 000,
- au moins un solide contenant au moins un groupe ester, la partie acide et/ou la partie alcool présentant au moins 8 atomes de carbone, avec une masse molaire de 158 à 20 000,
- au moins un solide contenant au moins un groupe éther, au moins un des deux radicaux éthers présentant au moins 8 atomes de carbone, avec une masse molaire de 144 à 20 000,
- au moins un solide contenant au moins un groupe amino ou un sel d'ammonium quaternaire, dont au moins un des 3 ou selon les cas 4 groupes autour de l'atome d'azote présente au moins 8 atomes de carbone, avec une masse molaire de 129 à 20 000,
- au moins un solide contenant au moins un groupe amide, le radical acide de l'amide présentant au moins 8 atomes de carbone, avec une masse molaire de 157 à 20 000,
- au moins un solide contenant au moins un groupe époxyde, celui-ci présentant au moins 8 atomes de carbone, avec une masse molaire de 128 à 20 000,
- au moins un solide contenant au moins un groupe anhydride, celui-ci présentant au moins 8 atomes de carbone, avec une masse molaire de 210 à 20 000,
- au moins un solide organo-phosphoré, présentant au moins 8 atomes de carbone, avec une masse molaire de 193 à 20 000,
- au moins un solide organo-boré, présentant au moins 8 atomes de carbone, avec une masse molaire de 174 à 20 000,
- au moins un solide organosulfuré, présentant au moins 8 atomes de carbone, avec une masse molaire de 164 à 20 000, et
- au moins un solide présentant au moins un groupe uréthane, présentant au moins 8 atomes de carbone, avec une masse molaire de 213 à 20 000.

23. Composition selon l'une quelconque des revendications précédentes,
**caractérisée en ce que**
pour la production d'un porogène à production retardée selon les revendications 1 à 16, on met en contact pendant un temps suffisant pour le revêtement un composant acide ou un composant à dégagement de gaz, ou les deux composants séparément l'un de l'autre avec une dispersion ou solution contenant de l'eau, qui contient au moins une substance de revêtement perméable à l'eau selon les revendications 1, 5, 6, 8, 9 ou 10.

24. Composition selon la revendication 23,
**caractérisée en ce qu'**
on dépose un revêtement filmogène par un procédé de revêtement.

25. Composition selon l'une des revendications précédentes,
**caractérisée en ce que**
pour la production du porogène produisant du gaz de façon retardée selon les revendications 1 à 16 on met en contact pendant une durée suffisante pour le revêtement le composant acide et/ou à dégagement de gaz avec une dispersion ou solution contenant un solvant non aqueux, qui contient au moins une substance de revêtement perméable à l'eau selon les revendications 1, 5, 6, 8, 9 ou 10, ou la substance correspondante elle-même.

26. Utilisation de la composition selon les revendications 1 à 22 dans un emballage, dans lequel le plâtre particulaire apte à se lier, le ou les porogènes, les adjuvants et additifs se présentent ensemble, le volume de l'emballage étant choisi de manière qu'on puisse au moins ajouter une quantité suffisante pour la liaison, d'un liquide contenant de l'eau.

27. Utilisation de la composition selon les revendications 1 à 22 pour la production d'une mousse locale, en particulier pour la production d'une mousse de montage, pour le remplissage de mousse ou le versement dans des espaces creux ou une mousse d'isolation à l'intérieur et à l'extérieur.

28. Utilisation de la composition selon les revendications 1 à 22 pour la production d'adhésifs de montage ou de masses de modelage.

29. Utilisation de la composition selon les revendications 1 à 22 pour la fabrication de produits de plâtre ayant des densités de 0,05 à 1,5 g/cm³.

30. Utilisation selon la revendication 29,
**caractérisée en ce que**
les produits de plâtre sont des articles moulés en mousse durcie comme des plaques de placo-plâtre, des plaques isolantes thermiques, des plaques de construction de parois en plâtre, des matériaux à base de plâtre et des plaques de recouvrement de plâtre, ou le produit de plâtre est un enduit isolant.
